# EUROPÄISCHE PATENTSCHRIFT

(11) **EP 0 475 010 B1**
(45) Veröffentlichungstag und Bekanntmachung des Hinweises auf die Patenterteilung: **21.06.1995**
(21) Anmeldenummer: 91111366.0
(22) Anmeldetag: 08.07.1991
(51) Int. Cl.: B60T 8/00

(54) **Regellogik für eine blockiergeschützte Fahrzeugbremsanlage**
Control logik for an anti skid vehicle brake installation
Logique de régulation pour une installation de freinage de véhicule, protégée contre le blocage

(30) Priorität: 03.09.1990 DE 4027785
(43) Veröffentlichungstag der Anmeldung: 18.03.1992
(73) Patentinhaber: WABCO GmbH, 30453 Hannover (DE)
(72) Erfinder: Gläbe, Klaus, W-3000 Hannover 1 (DE); Holst, Hans, W-3000 Hannover 91 (DE); Köster, Harald, W-3000 Hannover 91 (DE); Pannbacker, Helmut, W-3005 Hemmingen 5 (DE); Petersen, Erwin, Dr., W-3050 Wunstorf 1 (DE); Riedemann, Henrich, W-3000 Hannover 91 (DE); Ruhnau, Gerhard, W-3057 Neustadt 1 (DE)
(74) Vertreter: Schrödter, Manfred, Dipl.-Ing.

(56) Entgegenhaltungen:
- WO-A-88/03490
- GB-A- 2 011 564
- US-A- 4 402 047
- US-A- 4 582 159

## Beschreibung

Die Erfindung bezieht sich auf eine Regellogik für eine blockiergeschützte Fahrzeugbremsanlage gemäß dem Oberbegriff des Patentanspruchs 1.

Normale Antiblockiersysteme (ABS) sind für den Straßenbetrieb optimiert, und ermöglichen hier einen minimalen Bremsweg bei ausreichender Seitenführungskraft. Es hat sich jedoch gezeigt, daß derartige Antiblockiersysteme bei speziellen, selten vorkommenden Straßenoberflächen, wie losem Kies, Schotter, Geröll, loser Erde, Matsch, hoher Schnee einen längeren Bremsweg benötigen können, als dies mit ständig blockierten Rädern möglich wäre. Ursache hierfür ist, daß sich bei derartigen Oberflächen, die häufig auch im Gelände anzutreffen sind, ein "Keil" aus dem Oberflächenmaterial vor den blockierten Rädern bildet, der eine erhebliche Abbremsung verursacht. Nachteilig ist bei einer solchen Blockierbremsung, daß das Fahrzeug nicht mehr lenkbar ist.

Aus der DE-A-22 58 317 ist ein Antiblockiersystem bekannt, bei welchem zur Verkürzung des Bremsweges auf den obengenannten speziellen Straßenoberflächen ein zeitweiliges Blockieren der Räder zugelassen wird. Dies wird dadurch bewirkt, daß in vorgegebenen kurzen Zeitabständen die Regelung an einem oder mehreren Rädern unterdrückt, d. h. abgeschaltet wird. Hierdurch wird der volle, vom Fahrer eingesteuerte Bremsdruck zum Rad durchgeleitet, wodurch dieses blockiert.

Hierdurch kann es jedoch, insbesondere bei einer längerdauernden Bremsung auf den obengenannten speziellen Straßenoberflächen zu einem unzulässig hohen Verbrauch von Druckmittel im Bremssystem kommen.

Der Erfindung liegt die Aufgabe zugrunde, ein Fahrzeug mit Antiblockiersystem auf losem oder unebenem Untergrund mit einer möglichst hohen Verzögerung bei weitgehender Erhaltung der Seitenführung bzw. Lenkbarkeit abzubremsen, wobei der Druckmittel-Verbrauch möglichst gering sein soll.

Dabei soll möglichst auch die Kategorie 1 der ECE-Regelung für ABV (Automatische Blockierverhinderer) erfüllt werden.

Die vorstehende Aufgabe wird durch die im Patentanspruch 1 enthaltene Erfindung gelöst. Die Unteransprüche enthalten zweckmäßige Weiterbildungen der Erfindung.

Die Erfindung wird im folgenden anhand einer Zeichnung näher erläutert.

Diese zeigt in
- **Fig.1**: ein Blockschaltbild eines Antiblockiersystems mit elektronischem und pneumatischem Teil und in
- **Fig.2**: Diagramme der Radgeschwindigkeit, der Regel signale, und des Bremsdruckes über der Zeit gemäß der erfindungsgemäßen Gelände-Regellogik.

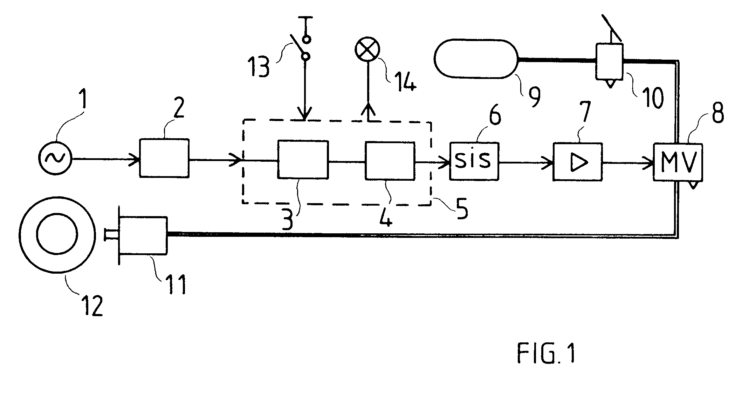

In der Fig.1 ist schematisch als Blockschaltbild ein Antiblockiersystem (ABS) für Fahrzeuge dargestellt. Der elektronische Teil des ABS besteht aus einem Radgeschwindigkeitssensor (1), welcher das Drehverhalten eines Fahrzeugrades (12) abtastet. Die Signale des Sensors (1) werden in einer Signalaufbereitungsstufe (2) digitalisiert. In einer nachfolgenden Elektronikstufe (3) werden aus den Radgeschwindigkeitssignalen Beschleunigungssignale (+b), Verzögerungssignale (-b) und Schlupfsignale (λ) gebildet.

Zur Erzeugung der Schlupfsignale ist eine Fahrzeug-Referenzgeschwindigkeit nötig, die mit Hilfe der Geschwindigkeiten der übrigen Räder nachgebildet wird. Es schließt sich eine Logik-Stufe (4) an, in denen aus den erwähnten Regelsignalen Ansteuersignale für ein Magnetventil (8) gebildet werden. Eine nachfolgende Sicherheitsschaltung (SIS) (6) überwacht die Ansteuersignale auf Fehler-Freiheit.

Die Bausteine (3) und (4) können auch durch einen Mikroprozessor (5) dargestellt werden. In diesem Fall werden also die erwähnten Regelsignale und die Magnetventil-Ansteuersignale nicht mit einer diskreten Schaltung (Hardware), sondern durch ein entsprechendes Programm (Software) erzeugt.

Ein Endverstärker (7) dient zur Verstärkung der Ventilansteuerungs-Signale. Mit einem Geländeschalter (13) kann die Logik des Bausteins (4) bzw. das Programm des Mikroprozessors (5) auf eine spezielle Gelände-Logik umgeschaltet werden. Die erfolgte Umschaltung ist durch eine ABS-Signallampe (14) erkennbar. Diese wird bei Geländebetrieb vorzugsweise alternierend angesteuert (Blinkbetrieb).

Der pneumatische oder hydraulische Teil der blockiergeschützten Bremsanlage besteht aus einem Druckmittel-Vorratsbehälter (9), einem Bremsventil (10), dem Regel-Magnetventil (8) und einem Bremszylinder (11). Durch das von der Elektronik angesteuerte Magnetventil (8) wird unabhängig von der Betätigung des Bremsventils (10) durch den Fahrer das Druckmittel in den Bremszylinder (11) eingesteuert oder über das Magnetventil (8) entlüftet bzw. eine Drucksenkung verursacht. Das Magnetventil (8) weist üblicherweise drei Stellungen auf, in denen der Druck gesteigert, gehalten oder abgesenkt werden kann.

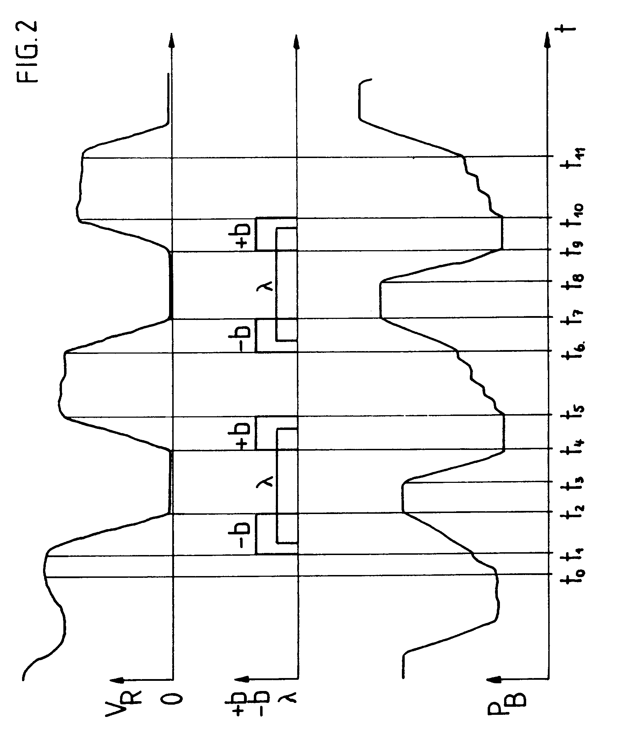

Anhand eines in Fig.2 dargestellten Diagramms wird im folgenden die Funktionsweise der erfindungsgemäßen speziellen Regellogik für Geländebetrieb näher erläutert. In der Fig.2 ist im oberen Teil der Verlauf einer Radgeschwindigkeit (v_{R}) bei einer geregelten Bremsung während des Geländebetriebes über der Zeit (t) aufgetragen.

Im mittleren Teil der Fig.2 sind die Regelsignale Radbeschleunigung (+b), Radverzögerung (-b) und Radschlupf (λ) über der Zeit (t) aufgetragen.

Im unteren Teil der Fig.2 ist der Bremsdruck (P_{B}) des gebremsten Rades über der Zeit (t) aufgetragen.

Das Fahrzeug befindet sich in einem ABS-geregelten Bremsvorgang im Gelände.

Im Zeitpunkt t0 legt der Fahrer, um die Bremsung effektiver zu gestalten, den Geländeschalter (13) um. Hierdurch erfolgt innerhalb der Elektronik des Antiblockiersystems die Umschaltung auf die erfindungsgemäße Gelände-Regellogik. Im Zeitpunkt (t1) verzögert sich das gebremste Rad so sehr, daß ein -b-Signal auftritt. Hierauf wird im Zeitraum (t1) bis (t2) der Bremsdruck schnell erhöht. Dies geschieht im Gegensatz zu normalen ABS-Bremsungen, wo bei Auftreten eines -b-Signals der Bremsdruck schnell abgebaut wird. Die erfindungsgemäße Bremsdruckerhöhung bringt das Fahrzeugrad (12) zum Blockieren (Zeitpunkt t2). In diesem Moment fällt naturgemäß das -b-Signal ab. Der im Zeitpunkt (t2) erreichte Bremsdruck wird nun über eine konstante Zeit von etwa 120 ms bis zum Zeitpunkt (t3) auf der erreichten Höhe gehalten. Anschließend wird der Bremsdruck im Zeitraum (t3) bis (t4) schnell abgebaut. Das Blockieren des Fahrzeugrades dauert bis zum Zeitpunkt (t4) (insgesamt etwa 240 ms). Durch den schnellen Abbau des Bremsdruckes läuft das Rad bei Vorlage eines λ-Signals anschließend wieder an. Hierdurch entsteht ein +b-Signal. Im Zeitraum (t4) bis (t5) ist das Fahrzeugrad bis zur vollen Geschwindigkeit (Fahrzeuggeschwindigkeit) wieder angelaufen. Das +b-Signal fällt daher wieder ab. Spätestens ab diesem Zeitpunkt (t5) wird der Bremsdruck zunächst in Stufen (gepulst) langsam wieder erhöht. Im Zeitpunkt (t6) reicht der so erhöhte Bremsdruck aus, um das Rad wieder so stark zu verzögern, daß ein -b-Signal auftritt. Ab diesem Zeitpunkt (t6) wird dann wieder der volle Bremsdruck eingesteuert, was schnell zum Blockieren des Rades im Zeitpunkt (t7) führt. Der Bremsdruck wird anschließend wieder für die schon erwähnte Zeit von ca. 120 ms konstant gehalten. Anschließend wiederholen sich die bereits beschriebenen Regelvorgänge (Zeitpunkt (t8) bis (t11)). Das Schlupfsignal (λ) tritt auf, sobald sich die Radgeschwindigkeit um einen vorgegebenen Betrag unter die Fahrzeuggeschwindigkeit abgesenkt hat.

Wie man aus der Fig.2 erkennt, ergeben sich für die Radgeschwindigkeit (v_{R}) Phasen mit einer konstanten Dauer von etwa 240 ms, in denen das Rad voll blockiert ist. Hierdurch tritt die oben erwähnte Keilwirkung des losen Untergrundes auf, welche das Fahrzeug besonders stark verzögert. Durch die zwischengeschalteten Abschnitte, in denen das Rad frei laufen kann, wird wiederum eine ausreichende Seitenführungskraft des Rades ermöglicht. Die Regelfrequenz während des Geländebetriebes ist gegenüber der Regelfrequenz bei normalem ABS-Betrieb verringert und beträgt etwa eine Regelperiode pro Sekunde.

Aus Sicherheitsgründen wird die beschriebene Geländeregellogik nur unterhalb einer Fahrzeuggeschwindigkeit von ca. 40 km/h zugelassen. Wird der Geländeschalter (13) schon bei höherer Geschwindigkeit eingeschaltet, so schaltet sich die Regellogik bei der Grenzgeschwindigkeit von ca. 40 km/h selbständig auf Geländebetrieb um.

Unterhalb einer Fahrzeuggeschwindigkeit von ca. 15 km/h wird beim Geländebetrieb der volle Bremsdruck in die Radbremszylinder eingesteuert und somit eine Blockierschutzregelung überhaupt gesperrt. Dies ist vorteilhaft, um im letzten Bereich des Bremsvorganges einen kurzen Bremsweg zu erreichen. Die genannten Geschwindigkeiten von 40 km/h und 15 km/h lassen sich durch Umprogrammierung des Mikroprozessors (5) auch verschieben. Ein Blockieren unterhalb von 15 km/h ist vom Gesetzgeber zugelassen.

Ein weiteres Merkmal der Geländelogik liegt darin, daß eine sogenannte MIR-Verknüpfung der Vorderräder aufgehoben wird. Eine solche MIR-Logik (MIR = Modifizierte Individual Regelung) dient bei einer normalen ABS-Bremsung im Straßenbetrieb dazu, daß bei einer Bremsung auf unterschiedlichen Reibwerten der Straße rechts links (»-Split) der Aufbau des Giermomentes verzögert wird, und so dem Fahrer das Reagieren mit der Lenkung erleichtert wird. Eine derartige MIR-Logik bringt aber im Gelände keinen besonderen Vorteil.

Ein weiteres Merkmal der erfindungsgemäßen Gelände-Logik liegt darin, daß bei allradgetriebenen Fahrzeugen die Längsdifferentialsperre während einer Gelände-Regelung eingeschaltet bleibt. Dies liefert speziell beim Bremen während einer Talfahrt Vorteile. Hier kann nämlich die durch einen ALB-Regler (lastabhängige Bremsung) an der Hinterachse reduzierte Bremskraft nicht zum Blockieren der Hinterachsräder ausreichen, wodurch die erwünschte Keilbildung vor den Hinterrädern ausbleiben würde. Aus diesem Grund ist eine Bremskraftkoppelung zwischen Vorderachse und Hinterachse im Gegensatz zu einer normalen Straßen-ABS-Regelung erwünscht.

Um dem Fahrer die eingeschaltete Gelände-Logik anzuzeigen, wird bei betätigtem Geländeschalter (13) eine ABS-Warnleuchte (14) in Intervallen, d.h. im Blinkbetrieb angesteuert. Hierdurch wird der Fahrer darauf aufmerksam gemacht, daß die Fahrzeugräder kurzzeitig in einen blockierten Zustand gelangen können. Falls das Fahrzeug wieder auf normalen Straßen fährt, ist der Geländeschalter wieder auf die Normalstellung umzulegen, um Beschädigungen der Reifen zu vermeiden.

## Patentansprüche

1. Regellogik für eine blockiergeschützte Fahrzeugbremsanlage, wobei innerhalb einer Elektronik Signale für die Radverzögerung (-b), -beschleunigung (+b), und -schlupf (λ) erzeugt werden, und wobei eine zusätzliche spezielle Regellogik bzw. ein spezielles Programmteil für Geländebetrieb vorgesehen ist, das so ausgebildet ist, daß Phasen erzeugt werden, in denen ein kurzzeitiges Blockieren der geregelten Räder (12) auftritt, dadurch gekennzeichnet, daß die spezielle Regellogik vom Fahrer mittels eines Geländeschalters (13) einschaltbar ist, und daß während des Auftretens eines Radverzögerungssignals (-b) Bremsdruck in die Radbremszylinder eingesteuert wird, solange bis das betreffende Rad blockiert ist, und anschließend der dann erreichte Bremsdruck für eine festgelegte Druckhaltephase konstant gehalten wird.

2. Logik nach Anspruch 1, dadurch gekennzeichnet, daß die Dauer der Druckhaltephase ca. 120 ms beträgt.

3. Logik nach einem oder mehrerer der Ansprüche 1 bis 2, dadurch gekennzeichnet, daß nach Ablauf der Druckhaltephase der Druck schnell abgebaut und gehalten wird und anschließend bis zum Auftreten des nächsten Radverzögerungssignals (-b) langsam (gepulst) aufgebaut wird.

4. Logik nach einem oder mehreren der Ansprüche 1 bis 3, dadurch gekennzeichnet, daß die Blockier-Phasen eine konstante Dauer aufweisen.

5. Logik nach Anspruch 4, dadurch gekennzeichnet, daß die Blockierphasen etwa 240 ms lang sind.

6. Logik nach einem oder mehreren der Ansprüche 1 bis 5, dadurch gekennzeichnet, daß die spezielle Regellogik für Geländebetrieb nur unterhalb einer vorgegebenen Fahrzeuggeschwindigkeit zur Verfügung ist, und oberhalb dieser Geschwindigkeit die normale Regellogik für Straßenbetrieb wirksam bleibt.

7. Logik nach Anspruch 6, dadurch gekennzeichnet, daß die vorgegebene Fahrzeuggeschwindigkeit etwa 40 km/h beträgt.

8. Logik nach einem oder mehreren der Ansprüche 1 bis 7, dadurch gekennzeichnet, daß unterhalb einer Fahrzeuggeschwindigkeit von ca. 15 km/h der volle Bremsdruck in die Radbremszylinder eingesteuert wird und die Blockierschutz-Regelung gesperrt wird.

9. Logik nach einem oder mehreren der Ansprüche 1 bis 8, dadurch gekennzeichnet, daß eine MIR-Verknüpfung der Vorderräder aufgehoben wird.

10. Logik nach einem oder mehreren der Ansprüche 1 bis 9, dadurch gekennzeichnet, daß bei betätigtem Geländeschalter (13) eine ABS-Warnleuchte (14) in Intervallen angesteuert wird.

11. Logik nach einem oder mehreren der Ansprüche 1 bis 10 für Allrad-Fahrzeuge, dadurch gekennzeichnet, daß bei betätigtem Geländeschalter (13) die Längsdifferentialsperre eingeschaltet bleibt.

## Claims

1. Control logic for an anti-lock vehicle brake system, wherein signals for the wheel deceleration (-b), wheel acceleration (+b) and wheel slip (λ) are generated electronically, and wherein an additional special control logic or a special program part for off-road manoeuvres is provided, which is such that phases in which a brief locking of the controlled wheels (12) occurs are produced, characterized in that the special control logic is arranged to be switched on by the driver by means of an off-road switch (13), and during the occurrence of a wheel deceleration signal (-b) brake pressure is applied to the wheel brake cylinders until the relevant wheel is locked, and subsequently the brake pressure then achieved is held constant for a specific pressure-maintaining phase.

2. Logic according to claim 1, characterized in that the duration of the pressure-maintaining phase is about 120 ms.

3. Logic according to one of or both of claims 1 and 2, characterized in that after expiry of the pressure-maintaining phase, the pressure is rapidly reduced and held and then slowly increased (in pulses) until the appearance of the next wheel deceleration signal (-b).

4. Logic according to one or more of claims 1 to 3, characterized in that the locking phases have a constant duration.

5. Logic according to claim 4, characterized in that the locking phases are about 240 ms long.

6. Logic according to one or more of claims 1 to 5, characterized in that the special control logic for off-road manoeuvres is available only below a predetermined vehicle speed and above this speed the normal control logic for road operation remains effective.

7. Logic according to claim 6, characterized in that the predetermined vehicle speed is about 40 km/h.

8. Logic according to one or more of claims 1 to 7 characterized in that below a vehicle speed of about 15 km/h the full brake pressure is applied to the wheel brake cylinders and the anti-lock system is blocked.

9. Logic according to one or more of claims 1 to 8, characterized in that an MIR linkage of the front wheels is disabled.

10. Logic according to one or more of claims 1 to 9, characterized in that, when the off-road switch (13) is on, an ABS warning light (14) is activated at intervals.

11. Logic according to one or more of claims 1 to 10 for all-wheel drive vehicles, characterized in that, when the off-road switch (13) is on, the longitudinal differential lock remains switched on.

## Revendications

1. Logique de régulation pour une installation de freinage de véhicule protégée contre le blocage, avec génération, à l'intérieur d'une électronique, de signaux pour la décélération (-b), l'accélération (+b) et le glissement (λ) d'une ou plusieurs roues, et avec prévision d'une logique de régulation spéciale supplémentaire, ou d'une partie de programme spéciale, pour un mode de fonctionnement tout-terrain dans lequel sont produites des phases au cours desquelles apparaît un blocage de courte durée des roues (12) régulées, caractérisée en ce que la logique de régulation spéciale peut être enclenchée par le conducteur au moyen d'un commutateur tout-terrain (13) et que, pendant l'apparition d'un signal de décélération de roue (-b), une pression de freinage est transmise aux cylindres de frein de roue jusqu'à ce que la roue concernée soit bloquée, et la pression de freinage atteinte à ce moment est ensuite maintenue constante au cours d'une phase déterminée de maintien de pression.

2. Logique selon la revendication 1, caractérisée en ce que la durée de la phase de maintien de pression est d'environ 120 ms.

3. Logique selon l'une des revendications 1 et 2, ou selon les deux, caractérisée en ce que, après la fin de la phase de maintien de pression, la pression est rapidement réduite et maintenue et que, ensuite, jusqu'à l'apparition du signal de décélération de roue (-b) suivant, la pression est montée lentement (de façon pulsée).

4. Logique selon une ou plusieurs des revendications 1 à 3, caractérisée en ce que les phases de blocage ont une durée constante.

5. Logique selon la revendication 4, caractérisée en ce que les phases de blocage ont une durée d'environ 240 ms.

6. Logique selon une ou plusieurs des revendications 1 à 5, caractérisée en ce que la logique de régulation spéciale pour le mode tout-terrain est disponible seulement au-dessous d'une vitesse prédéterminée du véhicule, la logique de régulation normale pour le mode de fonctionnement sur route restant en action au-dessus de cette vitesse.

7. Logique selon la revendication 6, caractérisée en ce que la vitesse prédéterminée du véhicule est d'environ 40 km/h.

8. Logique selon une ou plusieurs des revendications 1 à 7, caractérisée en ce que, au-dessous d'une vitesse de véhicule d'environ 15 km/h, la pleine pression de freinage est envoyée aux cylindres de frein de roue et la régulation antiblocage est inhibée.

9. Logique selon une ou plusieurs des revendications 1 à 8, caractérisée en ce qu'elle provoque la suppression d'une combinaison MIR ou de régulation individuelle modifiée des roues avant.

10. Logique selon une ou plusieurs des revendications 1 à 9, caractérisée en ce que, lorsque le commutateur tout-terrain (13) a été manoeuvré, un voyant lumineux de signalisation antiblocage (14) est allumé par intermittence.

11. Logique selon une ou plusieurs des revendications 1 à 10 pour véhicules dont toutes les roues sont motrices, caractérisée en ce que, lorsque le commutateur tout-terrain (13) a été manoeuvré, le blocage du différentiel longitudinal reste enclenché.
